# EUROPÄISCHE PATENTANMELDUNG

(11) **EP 0 574 720 A1**
(43) Veröffentlichungstag der Anmeldung: **22.12.1993**
(21) Anmeldenummer: 93108155.8
(22) Anmeldetag: 19.05.1993
(51) Int. Cl.: A01G 13/04

(54) **Vorrichtung zum Schutz von Pflanzen, insbesondere von Gartenpflanzen**

(30) Priorität: 17.06.1992 DE 9208099 U
(71) Anmelder: Paschold, Ernst, D-35282 Rauschenberg (DE)
(72) Erfinder: Paschold, Ernst, D-35282 Rauschenberg (DE)
(74) Vertreter: Walther, Horst, Dipl.-Ing.

(57) **Zusammenfassung**

Vorrichtung zum Schutz von Pflanzen, insbesondere von Gartenpflanzen, die eine Haube (2) und einen Pflanzring (3) aufweist, wobei der Pflanzring die Haube aufnimmt.

## Beschreibung

Die Erfindung betrifft eine Vorrichtung zum Schutz von Pflanzen, insbesondere Gartenpflanzen.

Bekannt sind Gewächshäuser: dort können eine Vielzahl von Pflanzen gezogen werden. Nachteilig hierbei ist jedoch, daß derartige Gewächshäuser relativ viel Platz beanspruchen. Darüber hinaus sind derartige Gewächshäuser im wesentlichen fest mit dem Boden verbunden, so daR eine leichte Demontage des Gewächshauses nach Gebrauch nicht möglich ist.

Darüber hinaus gibt es Pflanzen, die nur während der Anwachsphase bzw. in der Zeit, in der sie Früchte tragen, vor Umwelteinflüssen geschützt sein müssen. Auch diesen Anforderungen wird ein Gewächshaus herkömmlicher Art nicht gerecht, da ohne Umpflanzen die Pflanzen nicht aus dem Gewächshaus bzw. in das Gewächshaus gebracht werden können.

Der Erfindung liegt daher die Aufgabe zugrunde, eine Vorrichtung der eingangs genannten Art zu schaffen, die nachträglich für jede Pflanze einzeln über der Pflanze angebracht werden kann.

Die Aufgabe wird erfindungsgemäß dadurch gelöst, daß die Vorrichtung zum Schutz von Pflanzen aus einer Haube und einem Pflanzring besteht, wobei der Pflanzring die Haube aufnimmt. Der Pflanzring sitzt hierbei auf dem Boden auf und die Haube auf dem Pflanzring, wobei die Haube mit dem Pflanzring beispielsweise durch einen Bajonettverschluß mit dem Pflanzring verbindbar ist.

Im Prinzip fungiert hierbei die Vorrichtung als Treibhaus, mit der Folge, daR das Pflanzenwachstum beschleunigt wird. Sie schützt die Pflanze, beispielsweise eine Erdbeerpflanze, vor Verschmutzung und vor Schädlingen, z.B. Schnecken, und vermindert auch die Verdunstung von Wasser. Auch Vögel werden von den Pflanzen ferngehalten.

Darüber hinaus ist auch eine gute Dosierung mit Dünger möglich, da durch den Pflanzring der von dem Pflanzring umschlossene Boden gegenüber dem umgebenden Boden abgetrennt ist. Besonders geeignet ist die Vorrichtung zur Aufzucht von Pflanzen.

Nach einem besonderen Merkmal der Erfindung weist der Pflanzring einen nach innen schräg zur Mitte hin verlaufenden Boden auf, wobei der Boden etwa mittig eine Aussparung zur Aufnahme der Pflanze besitzt. Der derart ausgebildete Boden des Pflanzringes dient als Gießschräge, da das Wasser, das auf den Boden gegossen wird, unmittelbar in die Aussparung hineinläuft und dort in den Wurzelbereich der Pflanze gelangt, die im Bereich der Aussparung im Boden sitzt.

Vorteilhaft befindet sich zwischen der Haube und dem Pflanzring ein Luftspalt, der durch auf dem Pflanzring oder an der Haube angeordneten Nocken gebildet werden kann.

Der Luftspalt ist dabei von einem an der Haube angebrachten Haubenbund überdeckt, so daß von oben einfallende Verschmutzungen nicht in den Pflanzring gelangen können. Die Belüftung erfolgt demzufolge von unten.

In der Zeichnung ist eine beispielhafte Ausführungsform der Vorrichtung dargestellt.
Fig. 1 zeigt die Vorrichtung von der Seite, teilweise im Schnitt;
Fig. 2 ist ein Schnitt gemäß der Linie III/II in Fig. 1.

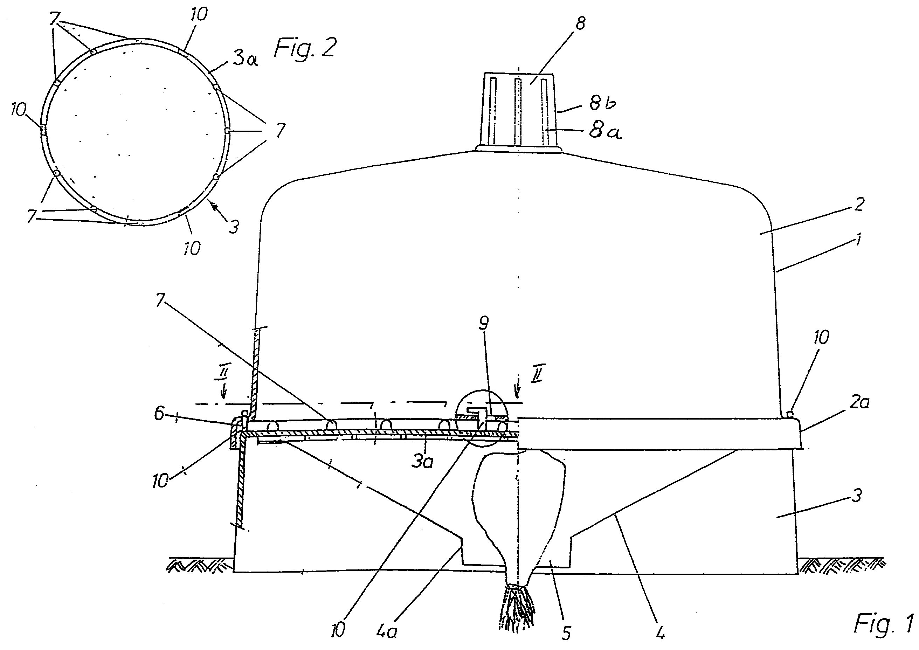

Wie Fig. 1 zeigt, ist die Vorrichtung insgesamt mit 1 bezeichnet. Die Vorrichtung besteht aus der Haube 2 und dem Pflanzring 3, wobei die Haube 2 auf dem Pflanzring 3 aufsitzt. Der Pflanzring 3 weist darüber hinaus den mit 4 bezeichneten als Gießschräge fungierenden Boden auf, der mittig mit der Aussparung 5 für die Pflanze versehen ist, Die Aussparung 5 wird durch einen vertikalen Kragen 4a gebildet, der mit dem Boden 4 des Pflanzringes 3 verbunden ist,

Zur Bildung eines Luftspaltes 6 zwischen der Haube und dem Pflanzring 3 besitzt der Pflanzring an seiner oberen Pflanzring-Auflagefläche 3a mehrere Nocken 7. Der Luftspalt 6 wird dabei von dem Haubenbund 2a überdeckt, so daß von oben einfallende Verschmutzungen in Form von Schmutzluft oder Schmutzwasser nicht in das Innere der Vorrichtung gelangen können.

Zur Verriegelung der Haube 2 mit dem Pflanzring 3 weist die Pflanzring-Auflagefläche 3a Haken 10 auf, die jeweils in an dem Haubenbund 2a angeordnete schlitzförmige Öffnungen 9 eingreifen. Dadurch wird der Pflanzring mit der Haube nach Art eines Bajonettverschlusses verbunden.

Die Haube 2 besitzt mittig ein Zylinderstück 8, in dessen Mantelfläche 8b Schlitze 8a achsparallel angebracht sind. Auch hierdurch wird das Haubeninnere vor Verschmutzungen geschützt.

Die Handhabung der Vorrichtung ist wie folgt:
Der Pflanzring wird leicht auf die Erde aufgedrückt; alsdann wird der Pflanzring abgehoben, und die abgezeichnete Ringfläche wird mit Dünger versehen. Diese Fläche wird dann angefeuchtet. Nach dem Anfeuchten wird der Pflanzring etwa 10 mm in die Erde gedrückt, wobei der Pflanzring von außen ebenfalls mit Erde angehäufelt werden kann. Durch die Aussparung 5 wird ein Pflanzloch in die Erde gedrückt, das die Pflanze aufnimmt. Nach dem Einsetzen der Pflanze können die Wurzeln der Pflanze mit Wasser in dem Boden eingeschlämmt werden. Danach wird die Haube aufgesetzt und verriegelt.

## Patentansprüche

1. Vorrichtung zum Schutz von Pflanzen, insbesondere von Gartenpflanzen,
**gekennzeichnet durch**
eine Haube (2) und einen Pflanzring (3), wobei der Pflanzring die Haube aufnimmt.

2. Vorrichtung nach Anspruch 1,
**dadurch gekennzeichnet,** daß
der Pflanzring (3) einen nach innen schräg zur Mitte hin verlaufenden Boden (4) aufweist, wobei der Boden (4) etwa mittig eine Ausspaarung zur Aufnahme der Pflanze aufweist.

3. Vorrichtung nach Anspruch 1,
**dadurch gekennzeichnet**, daß
zwischen der Haube (2) und dem Pflanzring (3) ein Luftspalt (6) besteht, der von einem an der Haube (2) angebrachten Haubenbund (2a) überdeckt ist.

4. Vorrichtung nach Anspruch 3
**dadurch gekennzeichnet**, daß
zur Bildung des Luftspaltes Nocken (7) vorgesehen sind.

5. Vorrichtung nach Anspruch 4,
**dadurch gekennzeichnet**, daß
die Nocken (7) an der oberen Pflanzring-Auflagefläche (3a) vorgesehen sind.

6. Vorrichtung nach Anspruch 1,
**dadurch gekennzeichnet**, daß
die Haube (2) mit dem Pflanzring (3) verbindbar ist.

7. Vorrichtung nach Anspruch 6,
**dadurch gekennzeichnet**, daß
die Verbindung von Haube (2) mit dem Pflanzring (3) nach Art eines Bajonettverschlusses erfolgt.

8. Vorrichtung nach Anspruch 7,
**dadurch gekennzeichnet**, daß
auf der oberen Pflanzring-Auflagefläche (3a) Haken (10) angebracht sind, die in schlitzförmige Öffnungen (9) im Haubenbund (2a), der auf den Nocken (7) aufliegt, eingreifen.

9. Vorrichtung nach Anspruch 1,
**dadurch gekennzeichnet**, daß
die Haube ein mittleres Zylinderstück (8) aufweist, in dessen Mantelfläche (8b) Öffnungen, z.B. Schlitze (8a) angebracht sind.
